(19) Europäisches Patentamt
European Patent Office
Office européen des brevets

(11) EP 4 143 253 B1

(12) **EUROPEAN PATENT SPECIFICATION**

(45) Date of publication and mention of the grant of the patent:
**30.10.2024 Bulletin 2024/44**

(21) Application number: **21726776.4**

(22) Date of filing: **29.04.2021**

(51) International Patent Classification (IPC):
***C08G 65/00*** *(2006.01)*

(52) Cooperative Patent Classification (CPC):
**C08G 65/007**

(86) International application number:
**PCT/US2021/029870**

(87) International publication number:
**WO 2021/222547 (04.11.2021 Gazette 2021/44)**

(54) **COPOLYMERS OF TETRAFLUOROETHYENE OXIDE AND HEXAFLUOROPROPYLENE OXIDE USEFUL AS LUBRICANTS**

COPOLYMERE AUS TETRAFLUORETHYENOXID UND HEXAFLUORPROPYLENOXID, VERWENDBAR ALS SCHMIERMITTEL

COPOLYMÈRES D'OXYDE DE TÉTRAFLUOROÉTHYLÈNE ET D'OXYDE D'HEXAFLUOROPROPYLÈNE UTILES COMME LUBRIFIANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2020 US 202063017752 P**

(43) Date of publication of application:
**08.03.2023 Bulletin 2023/10**

(73) Proprietor: **The Chemours Company FC, LLC**
**Wilmington, Delaware 19801 (US)**

(72) Inventors:
- **SHTAROV, Alexander Borisovich**
**Wilmington, Delaware 19803 (US)**
- **HOWELL, Jon Lee**
**Bear, Delaware 19701 (US)**
- **HACARLIOGLU, Pelin**
**Philadelphia, Pennsylvania 19147 (US)**

(74) Representative: **Abitz & Partner et al**
**Postfach 86 01 09**
**81628 München (DE)**

(56) References cited:
**WO-A1-2015/119943 US-B2- 8 067 344**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 143 253 B1

## Description

### FIELD OF THE INVENTION

The present invention relates to fluorinated lubricants and more particularly to copolymers of tetrafluoroethylene oxide and hexafluoropropylene oxide that are useful as lubricants.

### BACKGROUND OF THE INVENTION

Commercial scale options for high-performance perfluoropolyether lubricants are limited to only a few main approaches that use anionic polymerization of hexafluoropropylene epoxide (HFPO) monomer at low temperatures or controlled photo-oxidation polymerization of tetrafluoroethylene (TFE) or hexafluoropropylene (HFP) or both. The preparation of partially-fluorinated polymers of 2,2,3,3-tetrafluorooxetane and its further fluorination is also practiced, producing a $-(CF_2CF_2CH_2O)_n$-polymer that requires significant further fluorination to make a - $(CF_2CF_2CF_2O)_n$- polymer.

Commercial oils formed by anionic polymerization of HFPO (poly $-CF(CF_3)CF_2O-$), available under the trade name Krytox™ (The Chemours Company FC, LLC, Wilmington, DE) (PFPE-K), have superior stability in the presence of metal halides and oxides, however their viscosity changes significantly with a change in temperature (low viscosity index) and they have relatively higher pour points. Additionally, low molecular weight of relatively viscous oils increases their volatility and may limit some of their application.

Commercial oils produced from TFE by photo-oxidation polymerization that contain $-CF_2CF_2O-$ units (TFEO units) and are available under the trade names Fomblin® M and Fomblin® Z (Solvay Specialty Polymers, Milan, IT), have a lower pour point and a higher viscosity index, but also contain difluoroformyl ($-CF_2O-$) groups, and therefore decompose more rapidly in the presence of Lewis acids, metal halides, such as $AlCl_3$, metal oxides, or metals, such as aluminum or iron, than other commercial perfluoropolyethers (PFPEs), such as poly $-(CF(CF_3)CF_2O)_n-$ (Krytox™ PFPE-K) or-$(CF_2CF_2CF_2O)_n$- (PFPE-D), which do not contain $-CF_2O-$ groups. Commercial oils containing $-CF(CF_3)CF_2O-$ units, produced from HFP by photo-oxidation polymerization, and available under the trade name Fomblin® Y (Solvay Specialty Polymers, Milan, IT) also contain difluoroformyl ($-CF_2O-$) groups that lower their stability compared to PFPE-K.

The end groups in Fomblin® M and Fomblin® Z oils are mostly $CF_3O$-groups, which also lower their stability compared to the longer $CF_3CF_2O-$, $CF_3CF_2CF_2O-$, and $(CF_3)_2CFO-$ groups in the presence of metal halides and oxides [see, for example, Kasai, "Perfluoropolyethers: Intramolecular Disproportionation", Macromolecules, Vol. 25, pp. 6791-6799 (1992)]. Therefore, oils with a reduced amount of $CF_3O-$ end groups are desired to achieve higher stability. Oils that contain difluoroformyl ($-CF_2O-$) groups, such as Fomblin® M, Fomblin® Z, and Fomblin® Y oils, also have a lower thermo-oxidative stability in the presence of metals [see, for example, Koch et al., "Thermo-Oxidative Behaviour of Perfluoropolyalkylethers", Journal of Synthetic Lubrication, Vol. 12, pp. 191-204 (1995)]. In addition, certain metals and metal oxides, such as aluminum oxide ($Al_2O_3$) and titanium oxide ($TiO_2$), have a catalytic effect on the degradation of Fomblin® Y oils [Sianesi et al., "Perfluoropolyethers: Their Physical Properties and Behavior at High and Low Temperatures", Wear, Vol. 18, pp. 85-100 (1971)].

U.S. Patent No. 8,067,344, entitled "Lubricating grease composition" and issued November 29, 2011 to Shimura *et al.,* suggests perfluoropolyether oils from anionic polymerization of HFPO or both HFPO and TFEO in the presence of a cesium fluoride catalyst.

U.S. Patent Application Publication No. 2005/0075250, entitled "Lubricating greases" by MaCcone et al. and published April 7, 2005, suggests copolymers containing $-CF(CF_3)CF_2O-$ units and $-CF_2CF_2O$-units in addition to polymers containing $-CF(CF_3)CF_2O-$ units and polymers containing $-CF_2CF_2O-$ units having a viscosity within a certain range of values at 20°C.

French Patent No. 1373014, issued September 25, 1964, discloses fluorocarbon polyethers including copolymers including HFPO and TFEO and having a high TFEO content.

There is a need for lubricants that have a relatively small change in viscosity over a relatively wide temperature range corresponding to a high viscosity index (VI), a low pour point, a high stability against degradation at elevated temperatures in the presence of metals and metal oxides, which may be present on the surface of metals and metal alloys and act as Lewis acids, and a low volatility at elevated temperatures.

### BRIEF DESCRIPTION OF THE INVENTION

In an exemplary embodiment, a copolymer includes about 20 mol% to about 80 mol% of $-CF_2CF_2O-$ units, about 20 mol% to about 80 mol% of $-CF(CF_3)CF_2O-$ units, and about 0 mol% to about 45 mol% of one or more additional perfluoroalkyleneoxy units. The copolymer has a number average molecular weight ($M_n$) in the range of about 1,500 to about 20,000, a viscosity index in the range of about 100 to about 220, and an average TFEO run length of less than about 6.

In another exemplary embodiment, a process of forming a perfluoroalkyl polyether copolymer includes feeding

a gas stream containing tetrafluoroethylene oxide (TFEO) and hexafluoropropylene epoxide (HFPO) into a reactor containing a fluorinated solvent, an alkali metal fluoride salt, a polyethylene glycol) dialkyl ether, and either a short chain perfluoroalkyl polyether acid fluoride or a perfluoroalkyl acid fluoride, to form an acid fluoride-containing polymer. The TFEO and HFPO are fed in relative amounts such that the copolymer includes about 20 mol% to about 80 mol% of $-CF_2CF_2O-$ units and about 20 mol% to about 80 mol% of $-CF(CF_3)CF_2O-$ units. The process also includes hydrolyzing the acid fluoride-containing polymer with water or an aqueous solution of base to form a perfluoroalkyl polyether carboxylic acid or carboxylate salt. The process further includes distilling off the fluorinated solvent and treating the perfluoroalkyl polyether carboxylic acid or carboxylate salt with elemental fluorine to obtain the perfluoroalkyl polyether copolymer.

Other features and advantages of the present invention will be apparent from the following more detailed description of the preferred embodiments, which illustrate, by way of example, the principles of the invention.

## DETAILED DESCRIPTION OF THE INVENTION

Provided are exemplary lubricants with a high viscosity index (VI), a low pour point, a low volatility at high temperature, a high stability in the presence of metals, metal oxides, Lewis acids, or combinations thereof.

The provided polymers are copolymers of tetrafluoroethylene oxide (TFEO) and hexafluoropropylene oxide (HFPO) that offer high thermal and chemical stability, low volatility, and improved viscosity change (e.g., lower 40°C/100°C viscosity ratios and higher VI). When polymers of similar viscosity at 40°C (International Standards Organization (ISO) viscosity grade (VG)) are compared, TFEO/HFPO copolymers containing 20-80 mol% of $-CF(CF_3)CF_2O-$ units have a lower pour point than Fomblin® Y, $-CF(CF_3)CF_2O-co-CF_2O-$ lubricants, poly-HFPO Krytox™ lubricants, and poly-TFEO homopolymers.

As used herein, viscosity index (VI) is a unitless value for a subject polymer or copolymer oil based on its kinematic viscosities at 40°C and 100°C and calculated by the following formula:

$$VI = 100\frac{L - U}{L - H} \quad (1)$$

where U is the subject oil's kinematic viscosity at 40°C and L and H are values of kinematic viscosity at 40°C for reference oils having a VI of 0 and a VI of 100, respectively, and having the same kinematic viscosity at 100°C as the subject oil, where values for L and H are found in ASTM D2270.

As used herein, ISO viscosity grade refers to the ISO VG that corresponds to the kinematic viscosity of oil at 40°C reported in centistokes.

As used herein, pour point refers to the temperature, below which the polymer or copolymer loses its ability to be poured down from a beaker, following the American Society for Testing and Materials (ASTM) D97 standard test method.

As used herein, stability refers to the temperature at which 50% weight loss is observed in the presence of 2% aluminum oxide (neutral $\alpha$-$Al_2O_3$), as Lewis acid, in a standard 10°C/min ramp TGA test, with a higher temperature indicating a greater stability.

As used herein, volatility refers to % weight loss of the oil from room temperature to 300°C observed in a standard 10°C/min ramp TGA test, with a lower mass loss indicating a lower volatility.

As used herein, average TFEO run length refers to the average number of consecutive $-CF_2CF_2O-$ units in a copolymer formed by the ring-opening of TFEO monomer.

TFEO has the following chemical structure:

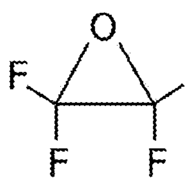 (1)

which becomes a $-CF_2CF_2O-$ perfluoroalkyleneoxy unit in the copolymer.

HFPO has the following chemical structure:

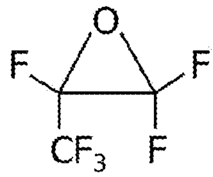

(2)

which becomes a $-CF(CF_3)CF_2O-$ perfluoroalkyleneoxy unit in the copolymer.

In exemplary embodiments, the ratio of monomers in a gas stream is selected to improve and change the lubricant properties of the resulting copolymer. In exemplary embodiments, the copolymer has about 20 mol% to about 80 mol% of $-CF_2CF_2O-$ units and about 20 mol% to about 80 mol% $-CF(CF_3)CF_2O-$ units, alternatively about 20 mol% to about 75 mol% of $-CF_2CF_2O-$ units and about 25 mol% to about 80 mol% of $-CF(CF_3)CF_2O-$ units. In exemplary embodiments, the copolymer has at least about 20 mol% of $-CF_2CF_2O-$ units, alternatively at least about 25 mol% of $-CF_2CF_2O-$ units, alternatively at least about 30 mol% of $-CF_2CF_2O-$ units, alternatively at least about 35 mol% of $-CF_2CF_2O-$units, alternatively at least about 40 mol% of $-CF_2CF_2O-$ units, or any value, range, or sub-range therebetween. In exemplary embodiments, the copolymer has at least about 20 mol% of $-CF(CF_3)CF_2O-$ units, alternatively at least about 25 mol% of $-CF(CF_3)CF_2O-$ units, alternatively at least about 30 mol% of $-CF(CF_3)CF_2O-$ units, alternatively at least about 35 mol% of $-CF(CF_3)CF_2O-$ units, alternatively at least about 40 mol% of $-CF(CF_3)CF_2O-$ units, alternatively at least about 45 mol% of $-CF(CF_3)CF_2O-$ units, alternatively at least about 50 mol% of $-CF(CF_3)CF_2O-$ units, alternatively at least about 55 mol% of - $CF(CF_3)CF_2O-$ units, or any value, range, or sub-range therebetween.

The copolymer may also include up to about 45 mol% of one or more additional perfluoroalkyleneoxy units other than the $-CF_2CF_2O-$ and $-CF(CF_3)CF_2O-$ perfluoroalkyleneoxy units, alternatively about 5% to about 45%, alternatively about 5% to about 35%, alternatively about 5% to about 25%, alternatively about 5% to about 10%, alternatively about 10% to about 40%, alternatively up to about 5%, alternatively up to about 10%, alternatively up to about 25%, alternatively up to about 35%, or any value, range, or sub-range therebetween. In some embodiments, the additional perfluoroalkyleneoxy unit is ($-CF_2-CF_2-CF_2-O-$). In some embodiments, ($-CF_2-CF_2-CF_2-O-$) units are introduced by copolymerization of TFEO, and optionally HFPO, with 2,2,3,3-tetrafluorooxetane to make ($-CH_2-CF_2-CF_2-O-$) containing polyfluorinated ether, followed by fluorination with elemental fluorine to form $-CF_2-CF_2-CF_2-O-$ containing polymers.

In exemplary embodiments, the copolymer has a number average molecular weight ($M_n$) in the range of about 1,500 Daltons (Da) to about 20,000 Da, alternatively about 3,500 Da to about 13,000 Da, alternatively about 2,500 Da to about 10,000 Da, or any value, range, or sub-range therebetween.

In exemplary embodiments, the copolymer has a viscosity index in the range of about 100 to about 220, alternatively about 120 to about 220, alternatively about 135 to about 200, alternatively about 100 to about 210, alternatively about 150 to about 220, or any value, range, or sub-range therebetween.

In exemplary embodiments, the copolymer has an average TFEO run length of less than about 6, alternatively less than about 5.5, alternatively less than about 5, alternatively less than about 4.5, alternatively less than about 4, or any value, range, or sub-range therebetween. A shorter average TFEO run length reduces the likelihood of crystallization of the copolymer upon cooling.

In exemplary embodiments, the copolymer has a pour point of about - 20°C or less, alternatively about -30°C or less, alternatively about -40°C or less, alternatively about -50°C or less, or any value, range, or sub-range therebetween.

In exemplary embodiments, the end groups of the copolymer contain primarily $CF_3CF_2CF_2O-$ and $CF_3CF_2O-$ end groups, thereby avoiding the high amount of $CF_3O-$ end groups typical for a perfluoropolyether containing $-CF_2-CF_2-O-$ units made by photo-oxidation polymerization of TFE, and giving a lubricant with a high stability and low volatility.

In exemplary embodiments, about 31 mol% or less of the end groups are $CF_3O-$ end groups, alternatively about 16 mol% or less, alternatively about 10 mol% or less, alternatively about 5 mol% or less, or any value, range, or sub-range therebetween. In exemplary embodiments, about 69 mol% or more of the end groups are selected from $CF_3CF_2CF_2O-$, $(CF_3)_2CFO-$, and $CF_3CF_2O-$ end groups, alternatively about 84 mol% or more, alternatively about 90 mol% or more, alternatively about 95 mol% or more, or any value, range, or sub-range therebetween.

In exemplary embodiments, the stability of the copolymer is about 250°C or greater, alternatively about 250°C to about 450°C, alternatively about 275°C or greater, alternatively about 300°C or greater, alternatively about 325°C or greater, alternatively about 350°C or greater, alternatively about 350°C to about 450°C, alternatively about 375°C or greater, or any value, range, or sub-range therebetween.

In exemplary embodiments, the volatility of the copolymer at a useful temperature range is about 5% or less, alternatively about 1% to about 5%, alternatively about 4% or less, alternatively about 3% or less, alternatively about 2% or less, alternatively about 1% to about 2%, or any value, range, or sub-range therebetween.

In exemplary embodiments, the ISO viscosity grade of the copolymer is about 20 or greater, alternatively about

20 to about 170, alternatively about 25 or greater, alternatively about 25 to about 170, alternatively about 25 to about 110, alternatively about 50 or greater, alternatively about 95 or greater, alternatively about 95 to about 170, or any value, range, or sub-range therebetween.

In exemplary embodiments, the copolymer is formed by a process that includes feeding a gas stream containing TFEO and HFPO into a reactor containing a fluorinated solvent, an alkali metal fluoride salt, a polyethylene glycol) dialkyl ether, a short chain perfluoroalkyl polyether acid fluoride, a perfluoroalkyl acid fluoride, such as, for example, $CF_3C(O)F$ or $CF_3CF_2C(O)F$, or a perfluoroalkyl ketone or its corresponding alkoxide, such as, for example, $CF_3CF_2O^-$; $CF_3CF_2CF_2O^-$ ; $(CF_3)_2CFO$-, or $CF_3CF_2CF_2CF_2O^-$; to form an acid fluoride-containing polymer. The TFEO and HFPO may be provided in relative amounts in the gas stream such that the copolymer includes any of the relative amounts $-CF_2CF_2O-$ units and $-CF(CF_3)CF_2O-$ units disclosed herein. Maintaining the TFEO and HFPO ratio relatively constant during the polymerization provides a consistent co-polymer composition. To reduce the percentage of $CF_3O$-end groups, the relative amount of HFPO may be increased at the end of polymerization. In an exemplary embodiment, the gas stream is adjusted to contain a mole ratio of HFPO:TFEO of at least 4:1 at the end of polymerization such that about 5 mol% or less of the end groups of the perfluoroalkyl polyether copolymer are $CF_3O$- end groups. The method further includes working up the acid fluoride-containing polymer to form the copolymer.

In exemplary embodiments, the work-up includes hydrolyzing the acid fluoride-containing polymer or a solution of the acid fluoride-containing polymer in a fluorinated solvent with water or an aqueous solution of base to form a perfluoroalkyl polyether carboxylic acid or carboxylate salt. Appropriate fluorinated solvents may include, but are not limited to, a partially fluorinated ether, such as, for example, perfluorobutyl methyl ether. The work-up further includes distilling off the fluorinated solvent with heating that may convert the polyether carboxylic acid or carboxylate salt partially or completely to the polyether with $-OCF_2H$, $-OCF(CF_3)H$, and/or - $OCF=CF_2$ end groups. The process further includes treating the perfluoroalkyl polyether carboxylic acid or carboxylate salt, or above mixture containing $-OCF_2H$, $-OCF(CF_3)H$, and/or $-OCF=CF_2$ end groups with elemental fluorine to obtain the perfluoroalkyl polyether copolymer.

In exemplary embodiments, the reactor is an autoclave. In exemplary embodiments, the reaction occurs at a temperature in the range of about - 35°C to about 30°C, alternatively about -25°C to about -15°C, or any value, range, or sub-range therebetween, over a period of about 14 to about 18 hours.

In exemplary embodiments, the hydrolysis is with an aqueous sodium hydroxide solution to reach a pH in the range of 1 to 4. In exemplary embodiments, the treatment is with 25% elemental fluorine at a stepwise increasing temperature from 20°C to 150°C, alternatively from 25°C to 150°C, alternatively from 80°C to 150°C, alternatively from 20°C to 80°C, alternatively from 25°C to 80°C, or any range or sub-range therebetween.

Copolymers of the present invention may be used in any of a number of different applications, including, but not limited to, vacuum pump lubrication, automotive part lubrication, aviation part lubrication, and valve lubrication, including lubrication environments having a wide range of temperature and chemical conditions.

## EXAMPLES

The invention is illustrated in the following examples which do not limit the scope of the invention as described in the claims.

## Test Methods

### Determination of the polymer structure by $^{19}$F NMR

$^{19}$F NMR spectra (376.5 MHz, Bruker Ascend 400) were obtained for neat oils of the inventive examples or by dissolving the oils in Freon-113 with $C_6D_6$ capillary.

The average length of poly-TFEO segments in the inventive examples was calculated by dividing the sum of integration of the $^{19}$F NMR peaks that correspond to the poly($-CF_2CF_2O-$) segments (-90.0 to -91.5 ppm, several singlets, a), and the integration of the $^{19}$F NMR peaks that correspond to the $-CF_2C\mathbf{F_2}O--F(CF_3)CF_2O-$ (-86.7 to -88.7 ppm, AB-system, b) at the end of the poly($-CF_2CF_2O-$) segment neighboring the $-CF(C\overline{F_3})$-group, divided by 2, and by the integration of the $^{19}$F NMR peaks that correspond to the TFEO-segment $-CF_2C\mathbf{F_2}O-$ neighboring the $-CF(CF_3)CF_2O-$ group (-86.7 to -88.7 ppm, AB-system, b). In short, the average length of poly-TFEO segments was calculated as: (a + b) / 2b.

The overall percent of the $CF_3O$- end groups in the fluorinated oil copolymer was calculated by dividing the sum of the integration of the $^{19}$F NMR peaks that correspond to the poly- $CF_3O$- groups (-56.0 and -58.1 ppm, singlets, a) divided by 1.5, and divided by the sum of the integration of $CF_3O$- divided by 1.5, $C\mathbf{F_3}CF_2O$- (-89.3 and -89.5 ppm, multiple singlets, b) divided by 1.5, and $CF_3C\mathbf{F_2}CF_2O$- (-131.8 and -132.3 ppm, singlets, c) groups. In short, the mol% of $CF_3O$- end groups was calculated as: (a /1.5) / (a/1.5+b/1.5+c).

The overall percent of the $-CF(CF_3)CF_2O-$ groups in the fluorinated oil copolymer was calculated by dividing the sum of the integration of the $^{19}$F NMR peaks that correspond to the $-C\underline{\mathbf{F}}(CF_3)CF_2O-$ group (-145 to -146.5 ppm,

multiplets, a), by the sum of integration of the $^{19}F$ NMR peaks that correspond to the -C**F**($CF_3$)$CF_2$O- group (-145 to -146.5 ppm, multiplets, a), poly(-C**$F_2$**C**$F_2$**O-) segments (-90.0 to -91.5 ppm, several singlets, b) divided by 4, and the integration of the $^{19}F$ NMR peaks that correspond to the -$CF_2$C**$F_2$**O-CF($CF_3$)$CF_2$O- (-86.7 to -88.7 ppm, AB-system, c) at the end of poly(-$CF_2CF_2$O-) segment neighboring the -CF($CF_3$)-group divided by 2. In short, the mol% of-CF($CF_3$)$CF_2$O- units was calculated as: a / (a+b/4+c/2).

The number average molecular weight ($M_n$) value was determined by $^{19}F$ NMR by taking into account the weight and number of repeat units from integration of all -C**$F_2$**C**$F_2$**O- (-90.0 to -91.5 ppm, several singlets, and -86.7 to -88.7 ppm, AB-system), and -C**F**($CF_3$)$CF_2$O- (-145 to -146.5 ppm, multiplets) per number of end groups: $CF_3$O- (-56.0 and -58.1 ppm, singlets), C**$F_3$**$CF_2$O- (C**$F_3$**$CF_2$O-, -89.3 and -89.5 ppm, multiple singlets), and $CF_3CF_2CF_2$O- ($CF_3$C**$F_2$**$CF_2$O-, -131.8 and -132.3 ppm, singlets).

**Determination of the oil kinematic viscosity and ISO VG**

Kinematic viscosities were measured using Gravity Flow U-shaped Glass Tube Capillary Viscometer (ASTM D445-97) at temperatures of 40°C and 100°C and reported in centistokes (cSt). The ISO VG value corresponds to the oil kinematic viscosity measured at 40 °C and reported in centistokes (cSt).

**Determination of stability**

To determine stability, the test oil with 2% aluminum oxide (neutral $\alpha$-$Al_2O_3$), as Lewis acid, was loaded onto a tared 50-$\mu$g platinum pan in a TA Instruments (New Castle, DE) Q500 TGA and the temperature was ramped linearly from ambient conditions to 600°C at 10°C/minute under an air or nitrogen atmosphere with a 60 mL/minute flow rate. Weight and temperature data was collected at a rate of 0.50 seconds/point. The stability is reported as the temperature at which 50% weight loss of the test oil in the TGA occurs.

**Determination of volatility**

To determine volatility, the test oil was subjected to a standard 10°C/minute ramp thermogravimetric analyzer (TGA) test under an air or nitrogen atmosphere with a 60 mL/minute flow rate. Weight and temperature data was collected at a rate of 0.50 seconds/point. The volatility is reported as weight loss % of the copolymer when the temperature reaches 300°C.

**Examples 1-3**

A dry 1-gal Hastelloy-C autoclave was charged with 79.5 g of F[CF($CF_3$)$CF_2$O]$_a$-CF($CF_3$)C(O)F, where a has an average value of about 7, 16.6 g of cesium fluoride (CsF), 22 g of tetraglyme ($CH_3O(CH_2CH_2O)_4CH_3$), and 1358 g of perfluorobutyl methyl ether (HFE-7100; 3M Company, Maplewood, MN) as a fluorinated solvent, agitated, and cooled to a temperature in the range of -25°C to -15°C.

A gas stream containing TFEO and HFPO was fed into the reactor over the period of 16 h. The copolymer poly(hexafluoropropylene oxide-co-tetrafluoroethylene oxide) acid fluoride, having an $M_n$ of about 4500, was obtained.

The solvent was distilled off and the distillation residue was treated with 20% NaOH solution to reach a pH of 4. A solution of the polymer in Vertrel™ XF solvent (2,3-dihydrodecafluoropentane, Miller-Stephenson Chemical Co., Danbury, CT) was washed with water and methanol. The Vertrel™ XF solvent and a light product cut was distilled off under vacuum, and the tetraglyme removed by phase separation. The obtained ether copolymer mixture, $R_1$[[CF($CF_3$)$CF_2$O]$_n$-[$CF_2CF_2$O]$_m$]$_x$-$R_2$, where $R_1$ is F[CF($CF_3$)$CF_2$O]$_a$-CF($CF_3$)$CF_2$O-, $CF_3CF_2CF_2$O-, or $CF_3CF_2$O-, $R_2$ is CF($CF_3$)COOH or -CF=$CF_2$, n has an average value of about 3, and m has average value of about 2.7, having an $M_n$ of about 5,000, was treated with 25% elemental fluorine at a stepwise increasing temperature from 100°C to 150°C to obtain the perfluorinated copolymer product, F[CF($CF_3$)$CF_2$O]$_n$-[$CF_2CF_2$O]$_m$-$CF_2CF_3$, $R_1$[[CF($CF_3$)$CF_2$O]$_n$-[$CF_2CF_2$O]$_m$]$_x$-$R_2$, where $R_1$ is F[CF($CF_3$)$CF_2$O]$_a$-CF($CF_3$)$CF_2$O-, $CF_3CF_2CF_2$O-, or $CF_3CF_2$O-, $R_2$ is $CF_2CF_3$ or -$CF_3$), n has an average value of about 2.6, and m has an average value of about 2.7, having an $M_n$ of about 5,000, which was separated by vacuum distillation into different fractions, including Inventive Example 1, Inventive Example 2, and Inventive Example 3. Values for certain properties of Inventive Example 1, Inventive Example 2, and Inventive Example 3 are shown in Table 1.

**Table 1: Inventive Examples 1-3**

| Inventive Example # | 1 | 2 | 3 |
|---|---|---|---|
| Viscosity at 40 °C (cSt) (ISO VG) | 22.44 | 78.48 | 107.4 |

(continued)

| Inventive Example # | 1 | 2 | 3 |
|---|---|---|---|
| Viscosity at 100 °C (cSt) | 4.79 | 13.44 | 17.02 |
| Mn (Da) | 2700 | 5000 | 6200 |
| Viscosity index (VI) | 139 | 175 | 173 |
| HFPO (mol%) | 47 | 55 | 56 |
| $CF_3O$- content (mol%) | 3.5 | 2.1 | 1.5 |
| Average TFEO run length | 3.3 | 2.7 | 2.7 |
| Pour point (°C) | N/D | N/D | -50 |

Inventive Examples 1-3 all have a high viscosity index, a low TFEO run length, and a low $CF_3O$- end group content. Inventive Example 3 has a low pour point. Pour point was not determined for Inventive Example 1 and Inventive Example 2.

**Examples 4-5**

A dry 1-gal Hastelloy-C autoclave was charged with 22.4 g of $F[CF(CF_3)CF_2O]_2-CF(CF_3)C(O)F$, 4.46 g of CsF, 6.45 g of tetraglyme ($CH_3O(CH_2CH_2O)_4CH_3$), and 1084 g of perfluorobutyl methyl ether (HFE-7100) as a fluorinated solvent, agitated, and cooled to a temperature in the range of -25°C to -15°C.

A gas stream containing TFEO and HFPO was fed into the reactor over the period of 18 h. The copolymer poly(hexafluoropropylene oxide) (tetrafluoroethylene oxide) acid fluoride was obtained, where the acid fluoride end groups were $-CF(CF_3)C(O)F$ or $-CF_2C(O)F$.

The solvent was distilled off and the distillation residue was treated with 20% NaOH solution to reach a pH in the range of 2 to 3. A solution of the polymer in Vertrel™ XF solvent was washed with water and methanol. The Vertrel™ XF solvent and a light product cut was distilled off under vacuum, and the tetraglyme removed by phase separation. The obtained acid copolymer was treated with 25% elemental fluorine at a stepwise increasing temperature from 80°C to 150°C to obtain the perfluorinated copolymer product, where the end group was $-OCF_2CF_3$ or $-OCF_3$, which was separated by vacuum distillation into different fractions, including Inventive Example 4 and Inventive Example 5. Values for certain properties of Inventive Example 4 and Inventive Example 5 are shown in Table 2.

**Table 2: Inventive Examples 4-5**

| Inventive Example # | 4 | 5 |
|---|---|---|
| Viscosity at 40 °C (cSt) (ISO VG) | 48.55 | 96.11 |
| Viscosity at 100 °C (cSt) | 9.21 | 16.99 |
| $M_n$ (Da) | 4847 | 8107 |
| Viscosity index (VI) | 175 | 193 |
| HFPO (mol%) | 35 | 33 |
| $CF_3O$- content (mol%) | 5.0 | 4.6 |
| Average TFEO run length | 3.6 | 3.7 |
| Pour point (°C) | N/D | -53 |

Inventive Examples 4-5 both have a high viscosity index, a low TFEO run length, and a low $CF_3O$- end group content. Inventive Example 5 has a low pour point. Pour point was not determined for Inventive Example 4.

**Examples 6-10**

A dry 1-gal Hastelloy-C autoclave was charged with 35.0 g of $F[CF(CF_3)CF_2O]_2-CF(CF_3)C(O)F$, 10.5 g of CsF, 22 g of tetraglyme ($CH_3O(CH_2CH_2O)_4CH_3$), and 1400 g of perfluorobutyl methyl ether (HFE-7100) as a fluorinated

solvent, agitated, and cooled to a temperature in the range of -25°C to -15°C.

A gas stream containing TFEO and HFPO was fed into the reactor over the period of about 14 h. The copolymer poly(hexafluoropropylene oxide) (tetrafluoroethylene oxide) acid fluoride was obtained, where the end groups were $-CF(CF_3)C(O)F$ or $-CF_2C(O)F$, with an $M_n$ of about 5300, as determined by $^{19}F$ NMR analysis.

The solvent was distilled off and the distillation residue was diluted with Vertrel™ XF and treated with a 5% NaOH aqueous solution to reach a pH in the range of 2 to 3 and phase-separated. A solution of the polymer in Vertrel™ XF solvent was washed with water and methanol. The Vertrel™ XF solvent and a light product cut was distilled off under vacuum while gradually increasing the temperature from 55°C to 180°C. After cooling the remaining solution to room temperature, a small tetraglyme top phase removed by phase separation. The obtained copolymer having end groups of $-OCF(CF_3)COOH$ (about 5 mol%), $-OCF_2COOH$ (about 93 mol%), and $-OCF_2H$ (about 2%), based on proton nuclear magnetic resonance ($^1H$-NMR) spectroscopy, was treated with flow of 25% elemental fluorine at a stepwise increasing temperature from 40°C to 80°C over a period of 6 h to obtain the perfluorinated copolymer product, where the end groups were $-OCF_2CF_3$ (about 93 mol%) or $-OCF_3$ (about 7 mol%), which was separated by vacuum distillation into different fractions, including Inventive Example 6, Inventive Example 7, Inventive Example 8, Inventive Example 9, and Inventive Example 10. Values for certain properties of Inventive Example 6, Inventive Example 7, Inventive Example 8, Inventive Example 9, and Inventive Example 10 are shown in Table 3.

**Table 3: Inventive Examples 6-10**

| Inventive Example # | 6 | 7 | 8 | 9 | 10 |
|---|---|---|---|---|---|
| Viscosity at 40 °C (cSt) (ISO VG) | 21.15 | 55.93 | 77.19 | 97.61 | 166.46 |
| Viscosity at 100 °C (cSt) | 4.51 | 9.91 | 13.02 | 15.96 | 25.35 |
| $M_n$ (Da) | 2950 | 4966 | 6287 | 7128 | 9173 |
| Viscosity index (VI) | 129 | 165 | 171 | 176 | 187 |
| HFPO (mol%) | 44 | 46 | 46 | 46 | 46 |
| $CF_3O$- content (mol%) | 5.6 | 4.4 | 3.2 | 3.6 | 3.4 |
| Average TFEO run length | 2.6 | 2.4 | 2.4 | 2.4 | 2.4 |
| Pour point (°C) | -65 | -56 | -56 | -56 | -46 |

Inventive Examples 6-10 all have a high viscosity index, a low TFEO run length, and a low $CF_3O$- end group content. Inventive Examples 6-10 all have a low pour point.

## Examples 11-12

A dry 1-gal Hastelloy-C autoclave was charged with 21.4 g of $F[CF(CF_3)CF_2O]_2-CF(CF_3)C(O)F$, 4.7 g of CsF, 6.5 g of tetraglyme ($CH_3O(CH_2CH_2O)_4CH_3$), and 1100 g of perfluorobutyl methyl ether (HFE-7100) as a fluorinated solvent, agitated, and cooled to a temperature in the range of -25°C to -15°C.

A gas stream containing TFEO and HFPO was fed into the reactor over the period of about 14 h. The copolymer poly(hexafluoropropylene oxide) (tetrafluoroethylene oxide) acid fluoride was obtained, containing the end groups $-CF(CF_3)C(O)F$ or $-CF_2C(O)F$.

The solution was treated with a 5% NaOH aqueous solution to reach a pH in the range of 1 to 3 and then phase-separated. The polymer solution was washed with water. The solvent and a light product cut was distilled off under vacuum while gradually increasing the temperature from 55°C to 160°C, and the remaining solution was cooled to room temperature. The obtained copolymer, having end groups of $-OCF(CF_3)COOH$ (about 5 mol%) or $-OCF_2COOH$ (about 73 mol% in combination), or $-OCF(CF_3)H$ (about 26%), based on $^1H$-NMR spectroscopy and an $M_n$ of about 3800, was treated with 25% elemental fluorine at a stepwise increasing temperature from 80 °C to 150 °C over a period of 72 h in a shaker tube to obtain the perfluorinated copolymer product having end groups of $-OCF_2CF_3$ (about 91 mol%) or $-OCF_3$ (about 9 mol%), which was separated by vacuum distillation into different fractions, including Inventive Example 11 and Inventive Example 12. Values for certain properties of Inventive Example 11 and Inventive Example 12 are shown in Table 4.

**Table 4: Inventive Examples 11-12**

| Inventive Example # | 11 | 12 |
|---|---|---|
| Viscosity at 40°C (cSt) (ISO VG) | 21.5 | 46.69 |
| Viscosity at 100°C (cSt) | 4.76 | 9.18 |
| $M_n$ (Da) | 3215 | 5016 |
| Viscosity index (VI) | 148 | 183 |
| HFPO (mol%) | 28 | 28 |
| $CF_3O$- content (mol%) | 2.9 | 2.2 |
| Average TFEO run length | 4.3 | 4.5 |
| Pour point (°C) | N/D | N/D |

Inventive Examples 11 and 12 both have a high viscosity index, a low TFEO run length, and a low $CF_3O$- end group content. Pour point was not determined for Inventive Examples 11 and 12.

## Examples 13-14

Inventive Examples 13-14 were prepared in separate batches following the procedure of the Example 4 with different TFEO /HFPO feed ratios while maintaining a stable feed ratio during the polymerization. Values for certain properties of Inventive Example 13 and Inventive Example 14 are shown in Table 5.

The stability of the oil in the presence of a Lewis acid represented by aluminum oxide was determined as the temperature at which a weight loss of 50% was observed in a standard 10°C/min ramp thermogravimetric analyzer TGA test determined under nitrogen in the presence of 2% aluminum oxide (neutral $\alpha$-$Al_2O_3$). For Inventive Example 13 (MW = 6750, ISO VG= 100), the stability (50% weight loss temperature in the presence of 2% neutral $\alpha$-$Al_2O_3$) was 389°C. 50% weight loss temperature in the standard 10°C/min ramp TGA test of the Inventive Example 13 copolymer without aluminum oxide was also 389°C. For Comparative Example 7 (Fomblin® M15, MW = 10400, ISO-84) the stability (50% weight loss temperature) for the standard 10°C/min ramp TGA test in the presence of 2% neutral $\alpha$-$Al_2O_3$, was 239°C, compared with 50% weight loss temperature of 454°C when it was tested without aluminum oxide.

**Table 5: Inventive Examples 13-14**

| Inventive Example # | 13 | 14 |
|---|---|---|
| Viscosity at 40 °C (cSt) (ISO VG) | 100 | 42.0 |
| Viscosity at 100 °C (cSt) | 16.4 | 8.63 |
| $M_n$ (Da) | 6750 | 3517 |
| Viscosity index (VI) | 177 | 190 |
| HFPO (mol%) | 44 | 22 |
| $CF_3O$- content (mol%) | 5.8 | 11 |
| Average TFEO run length | 2.4 | 3.9 |
| Pour point (°C) | -53 | -41 |

The volatility of ISO VG= 100 oil of Inventive Example 13 measured as TGA % weight loss at 300°C was measured to be 1.48%, compared to the 16.69% for ISO VG= 101.7 oil of Comparative Example 2, and 1.49% for Comparative Example 7 (ISO VG= 84).

## Example 15

A dry 1-gal Hastelloy-C autoclave was charged with 21 g of $F[CF(CF_3)CF_2O]_2$-$CF(CF_3)C(O)F$, 5.4 g of CsF, 7.9 g of tetraglyme ($CH_3O(CH_2CH_2O)_4CH_3$), and 830 g of perfluorobutyl methyl ether (HFE-7100) as a fluorinated solvent, agitated, and cooled to a temperature in the range of 15°C to 22°C.

A gas stream containing TFEO and 2,2,3,3-tetrafluoro oxetane (cyclo-$CH_2CF_2CF_2O$) was fed into the reactor over the period of about 16 h. The copolymer poly(hexafluoropropylene oxide) (tetrafluoroethylene oxide) (tetrafluoro oxetane) acid fluoride solution, where the end groups were $-OCH_2CF_2C(O)F$ or$-OCF_2C(O)F$, was obtained.

The copolymer solution was treated with 5% NaOH aqueous solution to reach a pH in the range of 1 to 3, then phase-separated, and then washed with water. The solvent and a light product cut was distilled off under vacuum while gradually increasing the temperature from 55°C to 130°C. The obtained copolymer, $F[CF(CF_3)CF_2O]_3-[CF_2CF_2O]_m-[CH_2CF_2CF_2O]_n-Y$, where m/n = 1.6, and Y was $-CH_2CF_2COOH$ (44 mol%) or $-CF_2COOH$ (56 mol%), based on $^{19}F$-NMR spectroscopy, and having an $M_n$ of about 3340, was treated with 25% elemental fluorine, while gradually increasing the temperature from 25°C to 150°C over a period of 98 h in a shaker tube, to obtain, after removal of volatile components in vacuum, the perfluorinated copolymer product $F[CF(CF_3)CF_2O]_3-[CF_2CF_2O]_m-[CF_2CF_2CF_2O]_n-Z$, where the overall content of polymer units was $-[CF(CF_3)CF_2O]-$ about 10 mol%, $-[CF_2CF_2O]-$ about 50 mol%, $-[CF_2CF_2CF_2O]-$ about 40 mol%, TFEO run length about 3.4, and Z was $-CF_2CF_3$ (about 38 mol%) or $-CF_3$ (about 62 mol%), as an opaque oil (13 g), with overall content of end-groups $-OCF_2CF_2CF_3$ (about 50 mol%), $-OCF_2CF_3$ (about 19 mol%), and $-OCF_3$ (about 31 mol%).

## Comparative Examples

Certain TFEO polymers and HFPO polymers and one copolymer of TFEO and HFPO with a low fraction of $-CF(CF_3)CF_2O-$ units were evaluated as comparative examples.

**Table 6: Comparative Example 1**

| Comparative Example # | 1 |
|---|---|
| Viscosity at 40°C (cSt) (ISO VG) | 60.8 |
| Viscosity at 100 °C (cSt) | 12.85 |
| $M_n$ (Da) | 7100 |
| Viscosity index (VI) | 217 |
| HFPO (mol%) | 12 |
| $CF_3O$- content (mol%) | 30 |
| Average TFEO run length | 14 |
| Pour point (°C) | -5 |

Values of certain properties of Comparative Example 1, a copolymer of TFEO and HFPO having a low fraction of $-CF(CF_3)CF_2O-$ units, are shown in Table 6.

Comparative Example 1 has a high TFEO run length and a low HFPO content, which results in a high pour point temperature of the long poly-TFEO regions.

Values of certain properties of TFEO and HFPO polymers are shown in Table 7. Comparative Example 2 is Krytox™ VPF 1531 oil (The Chemours Company FC, LLC), a commercial homopolymer of HFPO. Comparative Example 3 is Krytox™ GPL 105 oil (The Chemours Company FC, LLC), a commercial homopolymer of HFPO. Comparative Example 4 is Krytox™ GPL 107 oil (The Chemours Company FC, LLC), a commercial homopolymer of HFPO. Comparative Example 5 is Fomblin® Y25 fluid (Solvay Specialty Polymers, Milan, IT), which is an HFP oxidation polymer. Comparative Example 6 is a TFEO homopolymer. Comparative Example 7 is Fomblin® M15 fluid (Solvay Specialty Polymers, Milan, IT), which is a TFE oxidation polymer.

**Table 7: Comparative Examples 2-7**

| Comparative Example # | 2 | 3 | 4 | 5 | 6 | 7 |
|---|---|---|---|---|---|---|
| Viscosity at 40 °C (cSt) | 101.7 | 160 | 450 | 80 | 20.8 | 84 |
| Viscosity at 100 °C (cSt) | 12.5 | 18 | 42 | 10 | 5.2 | 22 |
| Mn (Da) | 3900 | 470 0 | 7100 | 3700 | 3800 | 10400 |
| Viscosity index (VI) | 116 | 124 | 142 | 108 | 199 | 286 |
| Pour point (°C) | -42 | -36 | -30 | -35 | >+20 | -75 |

The viscosity index (VI) for the obtained TFEO/HFPO $F[CF(CF_3)CF_2O]_n-[CF_2CF_2O]_m-CF_2CF_3$ copolymer oils of the inventive examples was higher than for the HFPO homopolymers, which have a similar viscosity at 40°C (ISO VG), which is exemplified in Inventive Examples 3, 5, 8, 9 (VI = 171-193, ISO VG = 77-107), versus HFPO homopolymers and $-CF(CF_3)CF_2O-/-CF_2O-$ in Comparative Examples 2 and 5 (VI = 108-116, ISO VG = 80-102), and Inventive Example 10 (VI = 187, ISO VG = 166) as compared with the HFPO homopolymer of Comparative Example 3 (VI = 124, ISO VG = 160).

The pour points of Inventive Examples 3, 5, 8, 9 were in the range of -50°C to -56°C, which is lower than for the comparative examples of HFPO-containing oils of a similar ISO VG (77-107 cSt), such as the HFPO homopolymer of Comparative Example 2, or the Fomblin® Y $-CF(CF_3)CF_2O/-CF_2O-$ copolymer of Comparative Example 5. The pour point of Inventive Example 10 was -46°C, which is lower than for the HFPO homopolymer of Comparative Example 3, where both oils have similar viscosities at 40°C.

Comparative Examples 5 and 7 have a low stability, and Comparative Example 6 has a high pour point.

All above-mentioned references are hereby incorporated by reference herein.

While the invention has been described with reference to a preferred embodiment, it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

**1.** A copolymer comprising:

about 20 mol% to about 80 mol% of $-CF_2CF_2O-$ units;
about 20 mol% to about 80 mol% of $-CF(CF_3)CF_2O-$ units; and
about 0 mol% to about 45 mol% of one or more additional perfluoroalkyleneoxy units;
said copolymer having a number average molecular weight in the range of about 1,500 to about 20,000, determined as defined in the description;
said copolymer having an average TFEO (tetrafluoroethylene oxide) run length of less than about 6, determined as described in the description, wherein the average TFEO run length refers to the average number of consecutive $-CF_2CF_2O-$ units in a copolymer formed by the ring-opening of TFEO monomer.

**2.** The copolymer of claim 1, wherein the copolymer has a viscosity index in the range of about 100 to about 220.

**3.** The copolymer of claims 1 or 2, wherein the one or more additional perfluoroalkyleneoxy units comprises $-CF_2CF_2CF_2O-$ units.

**4.** The copolymer of any of the preceding claims, wherein about 31 mol% or less of the end groups of the copolymer are CF3O- end groups.

**5.** The copolymer of any of the preceding claims, wherein about 69 mol% or more of the end groups of the copolymer are selected from the group consisting of $CF_3CF_2CF_2O-$, $(CF_3)_2CFO-$, and $CF_3CF_2O-$end groups.

**6.** The copolymer of any of the preceding claims, wherein the number average molecular weight, determined as defined in the description, is in the range about 3,500 to about 13,000.

**7.** The copolymer of any of the preceding claims, wherein the ISO viscosity grade of the copolymer is above about 25.

**8.** The copolymer of any of the preceding claims, wherein the viscosity index is in the range of about 150 to about 220, or

wherein the average TFEO run length is less than about 4.5, or
wherein the copolymer has a pour point of about -20°C or less, or
wherein the copolymer has a pour point of about -50°C or less.

**9.** A process of forming a perfluoroalkyl polyether copolymer, the process comprising:

feeding a gas stream containing tetrafluoroethylene oxide (TFEO) and hexafluoropropylene epoxide (HFPO) into a reactor containing a fluorinated solvent, an alkali metal fluoride salt, a poly(ethylene glycol) dialkyl ether, and either a short chain perfluoroalkyl polyether acid fluoride or a perfluoroalkyl acid fluoride to form an acid fluoride-containing polymer, the TFEO and HFPO being fed in relative amounts such that the copolymer comprises:

about 20 mol% to about 80 mol% of $-CF_2CF_2O-$ units; and
about 20 mol% to about 80 mol% of $-CF(CF_3)CF_2O-$ units;

hydrolyzing the acid fluoride-containing polymer with water or an aqueous solution of base to form a perfluoroalkyl polyether carboxylic acid or carboxylate salt;
distilling off the fluorinated solvent; and
treating the perfluoroalkyl polyether carboxylic acid or carboxylate salt with elemental fluorine to obtain the perfluoroalkyl polyether copolymer.

**10.** The process of claim 9 further comprising thermally decomposing the perfluoroalkyl polyether carboxylic acid to form end caps of $-CF(CF_3)H$, $-CF_2H$, or $-OCF=CF_2$ prior to fluorination with elemental fluorine.

**11.** The process of claims 9 or 10 further comprising diluting the gas stream with at least one inert gas.

**12.** The process of any of claims 9 through 11 further comprising maintaining the reactor at a temperature in the range of about -35°C to about 30°C during the feeding.

**13.** The process of any of claims 9 through 12, wherein the fluorinated solvent is a partially fluorinated ether.

**14.** The process of any of claims 9 through 13, wherein the treating with elemental fluorine occurs at a temperature in the range of about 25°C to about 150°C.

**15.** The process of any of claims 9 through 14 further comprising adjusting the gas stream to contain a mole ratio of HFPO:TFEO of at least 4:1 at the end of polymerization such that about 5 mol% or less of the end groups of the perfluoroalkyl polyether copolymer are $CF_3O-$ end groups.

**Patentansprüche**

**1.** Copolymer umfassend:

etwa 20 Mol-% bis etwa 80 Mol-% $-CF_2CF_2O-$Einheiten;
etwa 20 Mol-% bis etwa 80 Mol-% $-CF(CF_3)CF_2O-$Einheiten; und
etwa 0 Mol-% bis etwa 45 Mol-% einer oder mehrerer zusätzlicher Perfluoralkylenoxy-Einheiten.
wobei das Copolymer ein zahlendurchschnittliches Molekulargewicht im Bereich von etwa 1 500 bis etwa 20 000, wie in der Beschreibung definiert bestimmt, aufweist,
wobei das Copolymer eine durchschnittliche TFEO- (Tetrafluorethylenoxid-) Lauflänge von weniger als etwa 6, wie in der Beschreibung beschrieben bestimmt, aufweist, wobei die durchschnittliche TFEO-Lauflänge sich auf die durchschnittliche Anzahl aufeinanderfolgender $-CF_2CF_2O-$Einheiten in einem Copolymer bezieht, das durch das Ringöffnen von TFEO-Monomer gebildet wird.

**2.** Copolymer nach Anspruch 1, wobei das Copolymer einen Viskositätsindex im Bereich von etwa 100 bis etwa 220 aufweist.

**3.** Copolymer nach den Ansprüchen 1 oder 2, wobei die eine oder mehreren zusätzlichen Perfluoralkylenoxy-Einheiten $-CF_2CF_2CF_2O-$Einheiten umfassen.

**4.** Copolymer nach einem der vorhergehenden Ansprüche, wobei etwa 31 Mol-% oder weniger der Endgruppen des Copolymers $CF_3O-$Endgruppen sind.

**5.** Copolymer nach einem der vorhergehenden Ansprüche, wobei etwa 69 Mol-% oder mehr der Endgruppen des Copolymers aus der Gruppe ausgewählt sind bestehend aus $CF_3CF_2CF_2O-$, $-(CF_3)_2CFO-$ und $-CF_3CF_2O-$Endgrup-

pen.

6. Copolymer nach einem der vorhergehenden Ansprüche, wobei das zahlendurchschnittliche Molekulargewicht, wie in der Beschreibung definiert bestimmt, im Bereich von etwa 3 500 bis etwa 13 000 liegt.

7. Copolymer nach einem der vorhergehenden Ansprüche, wobei der ISO-Viskositätsgrad des Copolymers über etwa 25 liegt.

8. Copolymer nach einem der vorhergehenden Ansprüche, wobei der Viskositätsindex im Bereich von etwa 150 bis etwa 220 liegt oder

   wobei die durchschnittliche TFEO-Lauflänge weniger als etwa 4,5 beträgt oder
   wobei das Copolymer einen Pourpoint von etwa -20 °C oder weniger aufweist oder
   wobei das Copolymer einen Pourpoint von etwa -50 °C oder weniger aufweist.

9. Verfahren zum Bilden eines Perfluoralkylpolyethercopolymers, wobei das Verfahren Folgendes umfasst:
   Eingeben eines Gasstroms, der Tetrafluorethylenoxid (TFEO) und Hexafluorpropylenepoxid (HFPO) enthält, in einen Reaktor, der ein fluoriertes Lösungsmittel, ein Alkalimetallfluoridsalz, einen Poly(ethylenglykol)dialkylether und entweder ein kurzkettiges Perfluoralkylpolyethersäurefluorid oder ein Perfluoralkylsäure fluorid enthält, um ein Säurefluorid enthaltendes Polymer zu bilden, wobei das TFEO und HFPO in relativen Mengen so eingegeben werden, dass das Copolymer Folgendes umfasst:

   etwa 20 Mol-% bis etwa 80 Mol-% $-CF_2CF_2O$-Einheiten; und
   etwa 20 Mol-% bis etwa 80 Mol-% $-CF(CF_3)CF_2O$-Einheiten;
   Hydrolysieren des Säurefluorid enthaltenden Polymers mit Wasser oder einer wässrigen Lösung einer Base, um eine Perfluoralkylpolyethercarbonsäure oder -carboxylatsalz zu bilden,
   Abdestillieren des fluorierten Lösungsmittels; und
   Behandeln der Perfluoralkylpolyethercarbonsäure oder des -carboxylatsalzes mit elementarem Fluor, um das Perfluoralkylpolyethercopolymer zu erhalten.

10. Verfahren nach Anspruch 9, ferner thermisches Zersetzen der Perfluoralkylpolyethercarbonsäure umfassend, um Endkappen von $-CF(CF_3)H$, $-CF_2H$ oder $-OCF=CF_2$ vor Fluorieren mit elementarem Fluor zu bilden.

11. Verfahren nach Anspruch 9 oder 10, ferner Verdünnen des Gasstroms mit mindestens einem inerten Gas umfassend.

12. Verfahren nach einem der Ansprüche 9 bis 11, ferner Halten des Reaktors bei einer Temperatur im Bereich von etwa -35 °C bis etwa 30 °C während des Eingebens umfassend.

13. Verfahren nach einem der Ansprüche 9 bis 12, wobei das fluorierte Lösungsmittel ein teilweise fluorierter Ether ist.

14. Verfahren nach einem der Ansprüche 9 bis 13, wobei das Behandeln mit elementarem Fluor bei einer Temperatur im Bereich von etwa 25 °C bis etwa 150 °C erfolgt.

15. Verfahren nach einem der Ansprüche 9 bis 14, ferner Folgendes umfassend das Einstellen des Gasstroms, sodass er ein Molverhältnis von HFPO:TFEO von mindestens 4:1 am Ende der Polymerisation enthält, so dass etwa 5 Mol-% oder weniger der Endgruppen des Perfluoralkylpolyethercopolymers $CF_3O$-Endgruppen sind.

**Revendications**

1. Copolymère comprenant :

   environ 20 % en moles à environ 80 % en moles d'unités $-CF_2CF_2O-$ ;
   environ 20 % en moles à environ 80 % en moles d'unités $-CF(CF_3)CF_2O-$ ; et
   environ 0 % en moles à environ 45 % en moles d'une ou de plusieurs unités perfluoroalkylèneoxy supplémentaires ;
   ledit copolymère ayant un poids moléculaire moyen en nombre dans l'intervalle d'environ 1 500 à environ 20 000, déterminé comme il est défini dans la description ;

ledit copolymère ayant une longueur de plage de TFEO (oxyde de tétrafluoroéthylène) moyenne de moins d'environ 6, déterminée comme il est décrit dans la description, la longueur de plage de TFEO moyenne se référant au nombre moyen d'unités $-CF_2CF_2O-$ consécutives dans un copolymère formé par l'ouverture de cycle d'un monomère de TFEO.

**2.** Copolymère selon la revendication 1, le copolymère ayant un indice de viscosité dans l'intervalle d'environ 100 à environ 220.

**3.** Copolymère selon les revendications 1 ou 2, dans lequel les une ou plusieurs unités perfluoroalkylèneoxy supplémentaires comprennent des unités $-CF_2CF_2CF_2O-$.

**4.** Copolymère selon l'une quelconque des revendications précédentes, dans lequel environ 31 % en moles ou moins des groupes d'extrémité du copolymère sont des groupes d'extrémité $CF_3O-$.

**5.** Copolymère selon l'une quelconque des revendications précédentes, dans lequel environ 69 % en moles ou plus des groupes d'extrémité du copolymère sont choisis dans le groupe constitué de groupes d'extrémité $CF_3CF_2CF_2O-$, $(CF_3)_2CFO-$ et $CF_3CF_2O-$.

**6.** Copolymère selon l'une quelconque des revendications précédentes, dans lequel le poids moléculaire moyen en nombre, déterminé comme il est défini dans la description, est dans l'intervalle d'environ 3 500 à environ 13 000.

**7.** Copolymère selon l'une quelconque des revendications précédentes, dans lequel le degré de viscosité ISO du copolymère est supérieur à environ 25.

**8.** Copolymère selon l'une quelconque des revendications précédentes, dans lequel l'indice de viscosité est dans l'intervalle d'environ 150 à environ 220, ou

dans lequel la longueur de plage de TFEO moyenne est inférieure à environ 4,5, ou
dans lequel le copolymère a un point de coulée d'environ -20 °C ou moins, ou
dans lequel le copolymère a un point de coulée d'environ -50 °C ou moins.

**9.** Procédé de formation d'un copolymère de polyéther de perfluoroalkyle, le procédé comprenant :
l'alimentation d'un courant gazeux contenant de l'oxyde de tétrafluoroéthylène (TFEO) et de l'époxyde d'hexafluoropropylène (HFPO) dans un réacteur contenant un solvant fluoré, un sel de fluorure de métal alcalin, un dialkyléther de poly(éthylèneglycol) et soit un fluorure d'acide de polyéther de perfluoroalkyle à chaîne courte, soit un fluorure d'acide de perfluoroalkyle pour former un polymère contenant un fluorure d'acide, le TFEO et le HFPO étant alimentés dans des quantités relatives de sorte que le copolymère comprenne :

environ 20 % en moles à environ 80 % en moles d'unités $-CF_2CF_2O-$ ; et
environ 20 % en moles à environ 80 % en moles d'unités $-CF(CF_3)CF_2O-$ ;
l'hydrolyse du polymère contenant un fluorure d'acide avec de l'eau ou une solution aqueuse d'une base pour former de l'acide carboxylique ou un sel de carboxylate de polyéther de perfluoroalkyle ;
l'élimination par distillation du solvant fluoré ; et
le traitement de l'acide carboxylique ou du sel de carboxylate de polyéther de perfluoroalkyle avec du fluor élémentaire pour obtenir le copolymère de polyéther de perfluoroalkyle.

**10.** Procédé selon la revendication 9 comprenant en outre la décomposition thermique de l'acide carboxylique de polyéther de perfluoroalkyle pour former des coiffages d'extrémité de $-CF(CF_3)H$, $-CF_2H$ ou $-OCF=CF_2$ avant la fluoration avec du fluor élémentaire.

**11.** Procédé selon les revendications 9 ou 10 comprenant en outre la dilution du courant gazeux avec au moins un gaz inerte.

**12.** Procédé selon l'une quelconque des revendications 9 à 11 comprenant en outre le maintien du réacteur à une température dans l'intervalle d'environ -35 °C à environ 30 °C pendant l'alimentation.

**13.** Procédé selon l'une quelconque des revendications 9 à 12, dans lequel le solvant fluoré est un éther partiellement fluoré.

**14.** Procédé selon l'une quelconque des revendications 9 à 13, dans lequel le traitement avec du fluor élémentaire se produit à une température dans l'intervalle d'environ 25 °C à environ 150 °C.

**15.** Procédé selon l'une quelconque des revendications 9 à 14 comprenant en outre l'ajustement du courant gazeux pour qu'il contienne un rapport molaire de HFPO:TFEO d'au moins 4:1 à la fin de la polymérisation de sorte qu'environ 5 % en moles ou moins des groupes d'extrémité du copolymère de polyéther de perfluoroalkyle sont des groupes d'extrémité $CF_3O$-.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8067344 B, Shimura
- US 20050075250, MaCcone
- FR 1373014


### Non-patent literature cited in the description


- **KASAI.** Perfluoropolyethers: Intramolecular Disproportionation. *Macromolecules,* 1992, vol. 25, 6791-6799
- **KOCH et al.** Thermo-Oxidative Behaviour of Perfluoropolyalkylethers. *Journal of Synthetic Lubrication,* 1995, vol. 12, 191-204
- **SIANESI et al.** Perfluoropolyethers: Their Physical Properties and Behavior at High and Low Temperatures. *Wear,* 1971, vol. 18, 85-100